# EUROPEAN PATENT APPLICATION

(11) **EP 4 467 909 A1**
(43) Date of publication of application: **27.11.2024**
(21) Application number: 22924142.7
(22) Date of filing: 16.12.2022
(51) Int. Cl.: F25D 23/00

(54) **IN-COMPARTMENT AIR-CONDITIONING DEVICE, REFRIGERATION DEVICE, AND DELIVERY CONTAINER**

(30) Priority: 31.01.2022 JP 2022013372
(71) Applicant: DAIKIN INDUSTRIES, LTD., Osaka-shi, Osaka 530-0001 (JP)
(72) Inventor: SHIBUYA Kento, Osaka-shi, Osaka 530-0001 (JP); HIRATA Wataru, Osaka-shi, Osaka 530-0001 (JP)
(74) Representative: Hoffmann Eitle
(86) International application number: PCT/JP2022/046311
(87) International publication number: WO 2023/145291

(57) **Abstract**

An adsorber (234, 235) of an inside air control apparatus (100) separates outside air into a first gas having a higher concentration of nitrogen and a lower concentration of oxygen and a second gas having a lower concentration of nitrogen and a higher concentration of oxygen. The inside air control apparatus (100) performs a decrease operation and an increase operation. In the decrease operation, the first gas is introduced to an inside of a storage (2) through a first gas passage (244) so that a concentration of oxygen in inside air decreases. In the increase operation, the second gas is introduced to the inside of the storage (2) through a second gas passage (245) so that a concentration of oxygen in the inside air increases.

## Description

### TECHNICAL FIELD

The present disclosure relates to an inside air control apparatus, a refrigeration apparatus, and a transportation container.

### BACKGROUND ART

Patent Document 1 discloses an inside air control apparatus for controlling a composition of inside air in a transportation container. In order to maintain freshness of fruits, vegetables, and the like stored in the transportation container, the inside air control apparatus adjusts a concentration of oxygen and a concentration of carbon dioxide in inside air.

The inside air control apparatus of Patent Document 1 is a gas separation device of a so-called pressure swing adsorption (PSA) type. The inside air control apparatus includes an adsorption vessel filled with an adsorbent. The inside air control apparatus supplies outside air (atmospheric air) to the adsorption vessel and performs an adsorption operation to allow the adsorbent to adsorb nitrogen in the outside air, and a desorption operation to allow the adsorbent in the adsorption vessel to desorb nitrogen.

In order to decrease a concentration of oxygen in the storage, the inside air control apparatus performs an operation for supplying nitrogen-enriched gas produced by the desorption operation into the storage. Further, due to breathing of fruits and vegetables stored in the storage, a concentration of oxygen in the inside air gradually decreases. Thus, in order to increase a concentration of oxygen in the inside air, the inside air control apparatus performs an operation for supplying outside air (atmospheric air) into the storage.

### CITATION LIST

### PATENT DOCUMENT

Patent Document 1: Japanese Unexamined Patent Publication No. 2017-219287

### SUMMARY OF THE INVENTION

### TECHNICAL PROBLEM

As described above, in order to increase a concentration of oxygen in the inside air, the typical inside air control apparatus supplies outside air (atmospheric air) into the storage. Thus, the typical inside air control apparatus is unable to increase "a concentration of oxygen in the gas supplied into the storage in order to increase a concentration of oxygen in the inside air" to a concentration higher than the concentration of oxygen (21%) of the atmospheric air. As a result, "the time required to increase a concentration of oxygen in the inside air to a target concentration of oxygen" cannot be shortened.

It is an object of the present disclosure to provide an inside air control apparatus where the time required to increase a concentration of oxygen in inside air can be shortened.

### SOLUTION TO THE PROBLEM

A first aspect of the present disclosure is directed to an inside air control apparatus (100) for adjusting a composition of inside air in a storage (2), comprising: an adsorber (234, 235) containing an adsorbent for adsorbing nitrogen and configured to separate outside air outside the storage into a first gas having a higher concentration of nitrogen and a lower concentration of oxygen than the outside air and a second gas having a lower concentration of nitrogen and a higher concentration of oxygen than the outside air; a first gas passage (244) through which the first gas flows; and a second gas passage (245) through which the second gas flows, the inside air control apparatus (100) being configured to perform a decrease operation for decreasing a concentration of oxygen in the inside air by introducing the first gas to an inside of the storage (2) through the first gas passage (244); and an increase operation for increasing a concentration of oxygen in the inside air by introducing the second gas to the inside of the storage (2) through the second gas passage (245).

The inside air control apparatus (100) of the first aspect performs the decrease operation for decreasing a concentration of oxygen in the inside air and the increase operation for increasing a concentration of oxygen in the inside air. In the increase operation, the second gas having a lower concentration of nitrogen and a higher concentration of oxygen than the outside air is introduced to the inside of the storage (2) through the second gas passage (245). Accordingly, the rate of increase in a concentration of oxygen in the inside air is higher than when the outside air is introduced to the inside of the storage (2) in order to increase a concentration of oxygen in the inside air. As a result, the time required to increase a concentration of oxygen in the inside air is shortened.

A second aspect of the present disclosure is an embodiment of the first aspect. In the second aspect, the second gas passage (245) is able to switch between an introduction mode for introducing the second gas to the inside of the storage (2) and a discharge mode for discharging the second gas to an outside of the storage (2).

In the second aspect, the second gas passage (245) switches between the introduction mode and the discharge mode. When the second gas passage (245) is in the introduction mode, the second gas flowing in the second gas passage (245) is introduced to the inside of the storage (2). When the second gas passage (245) is in the discharge mode, the second gas flowing in the second gas passage (245) is discharged to the outside of the storage (2).

A third aspect of the present disclosure is an embodiment of the second aspect. In the third aspect, the second gas passage (245) includes a trunk passage (246) connected to the adsorber (234, 235), a supply passage (248a) communicating with the inside of the storage (2), a discharge passage (248b) communicating with the outside of the storage (2), and a switching mechanism (249) allowing the trunk passage (246) to communicate with the supply passage (248a) in the introduction mode and allowing the trunk passage (246) to communicate with the discharge passage (248b) in the discharge mode.

In the third aspect, the second gas passage (245) includes the switching mechanism (249). When the second gas passage (245) is in the introduction mode, the switching mechanism (249) allows the trunk passage (246) to communicate with the supply passage (248a) so that the second gas is introduced to the inside of the storage (2) through the supply passage (248a). When the second gas passage (245) is in the discharge mode, the switching mechanism (249) allows the trunk passage (246) to communicate with the discharge passage (248b) so that the second gas is discharged to the outside of the storage (2) through the discharge passage (248b).

A fourth aspect of the present disclosure is an embodiment of the second or third aspect. In the fourth aspect, the inside air control apparatus (100) further includes an oxygen sensor (161) configured to measure a concentration of oxygen in the inside air; and a controller (110) configured to switch the second gas passage (245) between the introduction mode and the discharge mode based on a value measured by the oxygen sensor (161).

In the fourth aspect, the controller (110) switches the second gas passage (245) between the introduction mode and the discharge mode based on a value measured by the oxygen sensor (161) (an actual measured value of a concentration of oxygen in the inside air).

A fifth aspect of the present disclosure is an embodiment of any one of the first to fourth aspects. In the fifth aspect, in the increase operation, the second gas is introduced to the inside of the storage (2) through the second gas passage (245), and the first gas is introduced to the inside of the storage (2) through the first gas passage (244).

In the fifth aspect, in the increase operation of the inside air control apparatus (100), both the first gas and the second gas are introduced to the inside of the storage (2).

A sixth aspect of the present disclosure is an embodiment of the fifth aspect. In the sixth aspect, the inside air control apparatus (100) further includes a flow rate regulation mechanism (272) configured to regulate a flow rate of the first gas introduced to the inside of the storage (2) in the increase operation.

In the sixth aspect, the flow rate regulation mechanism (272) regulates the flow rate of the first gas introduced to the inside of the storage (2) in the increase operation.

A seventh aspect of the present disclosure is an embodiment of the sixth aspect. In the seventh aspect, the inside air control apparatus (100) further includes a first gas discharge passage (271) having ends, one of which is connected to the first gas passage (244) and the other one of which communicates with the outside of the storage (2), wherein the flow rate regulation mechanism (272) is a valve provided in the first gas discharge passage (271).

In the seventh aspect, when the valve serving as the flow rate regulation mechanism (272) is opened, part of the first gas is discharged to the outside of the storage (2) through the first gas discharge passage (271), and the rest of the first gas is introduced into the storage (2). Thus, when the valve serving as the flow rate regulation mechanism (272) changes the flow rate of the first gas flowing in the first gas discharge passage (271), the flow rate of the first gas introduced into the storage (2) changes accordingly.

An eighth aspect of the present disclosure is an embodiment of any one of the first to seventh aspects. In the eighth aspect, the adsorber includes a first adsorber (234) and a second adsorber (235) each containing the adsorbent, and the inside air control apparatus (100) alternately repeats a first operation for making the second gas flow out from the first adsorber (234) by supplying the outside air to the first adsorber (234) and for making the first gas flow out from the second adsorber (235), and a second operation for making the second gas flow out from the second adsorber (235) by supplying the outside air to the second adsorber (235) and for making the first gas flow out from the first adsorber (234).

In the eighth aspect, the inside air control apparatus (100) performs the first operation and the second operation alternately. In each of the first operation and the second operation, the outside air is separated into the first gas and the second gas.

A ninth aspect of the present disclosure is directed to a refrigeration apparatus (10) including: the inside air control apparatus (100) of any one of the first to eighth aspects; and a refrigerant circuit (11) configured to perform a refrigeration cycle to adjust a temperature of the inside air.

The refrigeration apparatus (10) of the ninth aspect adjusts the composition of the inside air by the operation of the inside air control apparatus (100) and adjusts the temperature of the inside air by the operation of the refrigerant circuit (11).

A tenth aspect of the present disclosure is directed to a transportation container (1) including: the refrigeration apparatus (10) of the ninth aspect; and a container body provided with the refrigeration apparatus (10) and constituting the storage (2).

In the transportation container (1) of the tenth aspect, the refrigeration apparatus (10) adjusts the composition and temperature of the air inside the container body (2).

### BRIEF DESCRIPTION OF THE DRAWINGS

FIG. 1 is a cross-sectional view of a transportation container of an embodiment.
FIG. 2 is a piping system diagram showing a refrigerant circuit of a transportation refrigeration apparatus of the embodiment.
FIG. 3 is a piping system diagram showing a configuration of an inside air control apparatus of the embodiment.
FIG. 4 is a block diagram showing a configuration of a controller of the inside air control apparatus of the embodiment.
FIG. 5 corresponds to FIG. 3 and is a diagram of the inside air control apparatus performing a first operation in a decrease operation.
FIG. 6 corresponds to FIG. 3 and is a diagram of the inside air control apparatus performing a second operation in the decrease operation.
FIG. 7 corresponds to FIG. 3 and is a diagram of the inside air control apparatus performing the first operation in an increase operation.
FIG. 8 corresponds to FIG. 3 and is a diagram of the inside air control apparatus performing the second operation in the increase operation.
FIG. 9 corresponds to FIG. 3 and is a diagram of the inside air control apparatus performing an outside air introduction operation.
FIG. 10 is a flowchart showing an operation of the controller of the inside air control apparatus of the embodiment.

### DESCRIPTION OF EMBODIMENTS

An embodiment of the present disclosure will be described below with reference to the drawings.

The present disclosure relates to a transportation container (1). The transportation container (1) is a reefer container capable of controlling an internal temperature. The transportation container (1) is used to transport fresh products (e.g., fruits, vegetables, flowers, and ornamental plants) which breathe by absorbing oxygen (O₂) in the air and releasing carbon dioxide (CO₂) into the air.

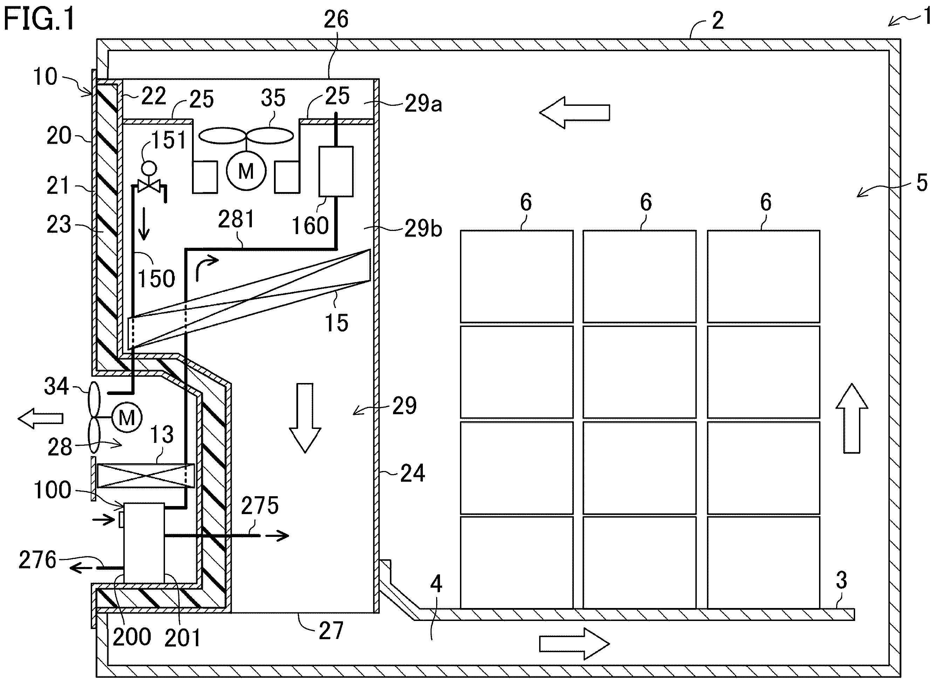

As illustrated in FIG. 1, the transportation container (1) includes a container body (2) and a transportation refrigeration apparatus (10). The transportation refrigeration apparatus (10) is attached to the container body (2). The transportation container (1) is used for marine transportation. The transportation container (1) is conveyed by a marine transporter such as a ship.

### -Container Body-

The container body (2) is a storage for storing the above fresh products.

The container body (2) has a hollow box shape. The container body (2) is horizontally long. The container body (2) has an opening formed at one end in the longitudinal direction. The opening of the container body (2) is blocked by the transportation refrigeration apparatus (10). The container body (2) contains a storage space (5) for storing cargos (6). The cargos (6) are boxes containing fresh products.

The storage space (5) has a bottom portion where a floorboard (3) on which the cargos (6) are to be placed is disposed. An underfloor path (4) through which air blown from the transportation refrigeration apparatus (10) passes is formed between the floorboard (3) and a bottom plate of the container body (2). The underfloor path (4) extends along the bottom plate of the container body (2) in the longitudinal direction of the container body (2). The underfloor path (4) has ends, one of which is connected to a blowout port (27) of the transportation refrigeration apparatus (10) and the other one of which communicates with a space above the floorboard (3) (i.e., the space where the cargos (6) are stored).

### -Transportation Refrigeration Apparatus-

The transportation refrigeration apparatus (10) includes a casing (20), a refrigerant circuit (11) that performs a refrigeration cycle, an external fan (34), and an internal fan (35).

### <Casing>

The casing (20) includes an external wall (21), an internal wall (22), a backboard (24), and a partition board (25). As will be described later, the casing (20) is provided with the refrigerant circuit (11), the external fan (34), and the internal fan (35).

The external wall (21) is a plate-shaped member disposed to cover the open end of the container body (2). The external wall (21) has a lower portion protruding toward the inside of the container body (2). The internal wall (22) is a plate-shaped member formed along the external wall (21). The internal wall (22) is disposed to cover a surface of the external wall (21) facing the inside of the container body (2). The space between the external wall (21) and the internal wall (22) is filled with a thermal insulator (23).

The casing (20) has a lower portion recessed toward the inside of the container body (2). The lower portion of the casing (20) forms an external equipment room (28) communicating with a space outside the transportation container (1). The external fan (34) is disposed in the external equipment room (28).

The backboard (24) is a member having a substantially rectangular flat plate shape. The backboard (24) is disposed closer to the inside of the container body (2) than the internal wall (22) is. An inside air flow path (29) is formed between the backboard (24) and the internal wall (22). The inside air flow path (29) has an upper end forming an intake port (26) of the casing (20) and has a lower end forming the blowout port (27) of the casing (20).

The partition board (25) is a plate-shaped member disposed to partition the inside air flow path (29) into upper and lower sections. The partition board (25) is disposed in an upper portion of the inside air flow path (29). The partition board (25) partitions the inside air flow path (29) into a primary flow path (29a) above the partition board (25) and a secondary flow path (29b) below the partition board (25). The primary flow path (29a) communicates with the storage space (5) via the intake port (26). The secondary flow path (29b) communicates with the underfloor path (4) via the blowout port (27). The internal fan (35) is attached to the partition board (25). The internal fan (35) is disposed to blow air sucked from the primary flow path (29a) to the secondary flow path (29b).

### <Refrigerant Circuit>

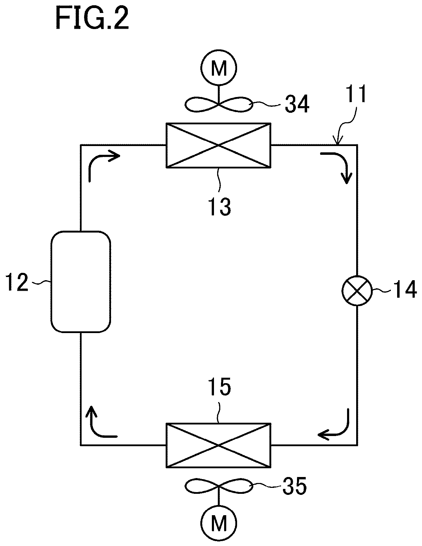

As illustrated in FIG. 2, the refrigerant circuit (11) is a closed circuit in which a compressor (12), an external heat exchanger (13), an expansion valve (14), and an internal heat exchanger (15) are connected through piping. When the compressor (12) is actuated, a refrigerant circulates through the refrigerant circuit (11) to perform a vapor compression refrigeration cycle. As illustrated in FIG. 1, the external heat exchanger (13) is disposed at the suction side of the external fan (34) in the external equipment room (28), and the internal heat exchanger (15) is disposed in the secondary flow path (29b) of the inside air flow path (29). Although not shown in FIG. 1, the compressor (12) is disposed in the external equipment room (28).

### -Operation of Transportation Refrigeration Apparatus-

The transportation refrigeration apparatus (10) performs a cooling operation for cooling inside air in the transportation container (1).

In the cooling operation, the compressor (12) of the refrigerant circuit (11) operates to circulate the refrigerant through the refrigerant circuit (11), thereby performing a vapor compression refrigeration cycle. In the refrigerant circuit (11), the refrigerant discharged from the compressor (12) passes through the external heat exchanger (13), the expansion valve (14), and the internal heat exchanger (15) in sequence, and then is sucked into and compressed in the compressor (12).

In the cooling operation, the external fan (34) and the internal fan (35) operate. When the external fan (34) operates, the outside air outside of the transportation container (1) is sucked into the external equipment room (28) and pass through the external heat exchanger (13). In the external heat exchanger (13), the refrigerant dissipates heat to the outside air and then condenses. When the internal fan (35) operates, the inside air in the storage space (5) of the transportation container (1) is sucked into the inside air flow path (29) and passes through the internal heat exchanger (15). In the internal heat exchanger (15), the refrigerant absorbs heat from the inside air and then evaporates.

The flow of the inside air will be described below. The inside air present in the storage space (5) flows into the primary flow path (29a) of the inside air flow path (29) through the intake port (26), and then is blown to the secondary flow path (29b) by the internal fan (35). The inside air having flowed into the secondary flow path (29b) is cooled when passing through the internal heat exchanger (15). Thereafter, the cooled air is blown to the underfloor path (4) through the blowout port (27), and then flows into the storage space (5) through the underfloor path (4).

In the inside air flow path (29), the primary flow path (29a) is located on the suction side of the internal fan (35), and the secondary flow path (29b) is located on the discharge side of the internal fan (35). Thus, during operation of the internal fan (35), the air pressure in the secondary flow path (29b) is slightly higher than the air pressure in the primary flow path (29a).

### -Inside Air Control Apparatus-

The transportation refrigeration apparatus (10) of this embodiment includes an inside air control apparatus (100).

The inside air control apparatus (100) is provided in the transportation refrigeration apparatus (10) to provide so-called controlled atmosphere (CA) transportation. The inside air control apparatus (100) adjusts the composition of air in the storage space (5) of the transportation container (1) so that the composition of the air is different from that of the atmospheric air.

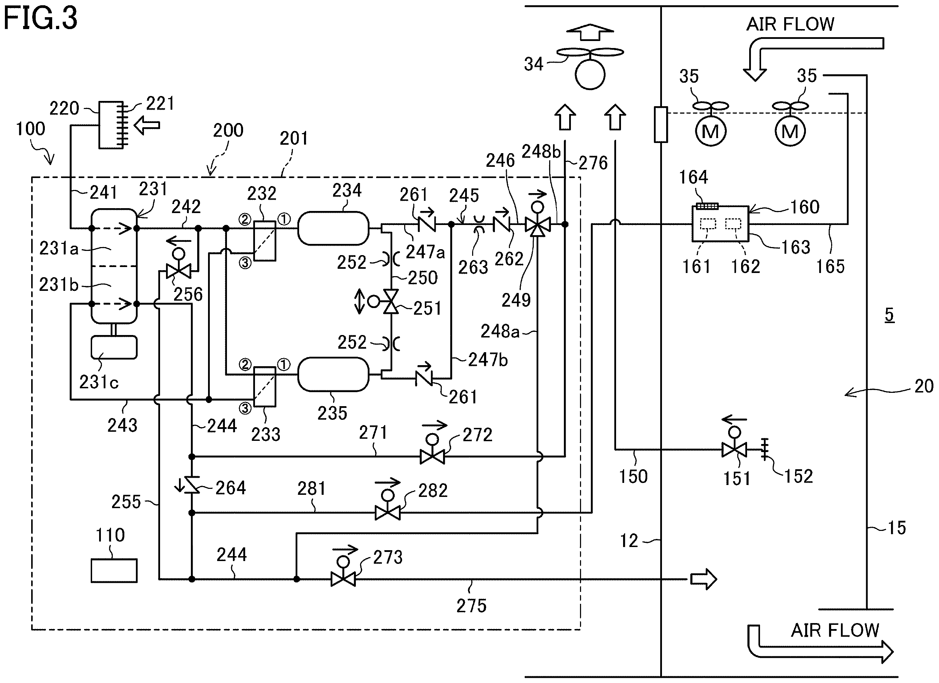

As illustrated in FIG. 3, the inside air control apparatus (100) includes a filter unit (220), a main unit (200), a gas supply pipe (275), a gas discharge pipe (276), a sensor unit (160), a ventilation exhaust pipe (150), and a controller (110). The inside air control apparatus (100) is a gas separation apparatus of a so-called pressure swing adsorption (PSA) type. The inside air control apparatus (100) separates outside air (atmospheric air), which is gas to be treated, into nitrogen-enriched gas and oxygen-enriched gas, where the nitrogen-enriched gas has a higher concentration of nitrogen and a lower concentration of oxygen than the atmospheric air, and the oxygen-enriched gas has a lower concentration of nitrogen and a higher concentration of oxygen than the atmospheric air. The nitrogen-enriched gas is a first gas and the oxygen-enriched gas is a second gas.

### <Filter Unit and Outside Air Pipe>

The filter unit (220) is a member having a box shape. The filter unit (220) is installed in the external equipment room (28) of the transportation refrigeration apparatus (10). The filter unit (220) includes an air filter (221). The air filter (221) is a filter for capturing dust, salt, and the like contained in the outside air. The air filter (221) of this embodiment is an air-permeable, waterproof membrane filter.

The filter unit (220) is connected to the main unit (200) via an outside air pipe (241). One end of the outside air pipe (241) is connected to the filter unit (220). The other end of the outside air pipe (241) is connected to an air pump (231) to be described later. The outside air pipe (241) guides the outside air (atmospheric air) having passed through the air filter (221), as a gas to be treated, to the air pump (231).

### <Main Unit>

The main unit (200) is installed in the external equipment room (28) of the transportation refrigeration apparatus (10). The main unit (200) includes the air pump (231), a first adsorption vessel (234), a second adsorption vessel (235), a first switching valve (232), a second switching valve (233), and a unit case (201) housing those components. The unit case (201) houses an introduction pipe (242), a suction pipe (243), a first gas pipe (244), and a second gas pipe (245).

### <Air Pump>

The air pump (231) includes a compression-side pump (231a), a decompression-side pump (231b), and a drive motor (231c). Each of the compression-side pump (231a) and the decompression-side pump (231b) sucks and discharges air. The compression-side pump (231a) and the decompression-side pump (231b) are connected to a drive shaft of the single drive motor (231c). In the air pump (231), both the compression-side pump (231a) and the decompression-side pump (231b) are driven by the single drive motor (231c).

The compression-side pump (231a) includes a suction port connected to the other end of the outside air pipe (241). The compression-side pump (231a) includes a discharge port connected to one end of the introduction pipe (242). The compression-side pump (231a) supplies gas to be treated, which has been sucked from the outside air pipe (241), to the first adsorption vessel (234) and the second adsorption vessel (235) through the introduction pipe (242).

The decompression-side pump (231b) includes a suction port connected to the suction pipe (243). The decompression-side pump (231b) includes a discharge port connected to the first gas pipe(244). The decompression-side pump (231b) discharges the gas to the first gas pipe (244), where the gas has been sucked from the first adsorption vessel (234) and the second adsorption vessel (235) through the suction pipe (243).

### introduction Pipe>

The introduction pipe (242) is a pipe for guiding gas to be treated, which has been discharged from the compression-side pump (231a), to the first adsorption vessel (234) and the second adsorption vessel (235). One end of the introduction pipe (242) is connected to the discharge port of the compression-side pump (231a). The other end of the introduction pipe (242) branches into two branch pipes, one of which is connected to the first switching valve (232) and the other one of which is connected to the second switching valve (233).

### <Suction Pipe>

The suction pipe (243) is a pipe for guiding gas, which has flown out from the first adsorption vessel (234) and the second adsorption vessel (235), to the decompression-side pump (231b). One end of the suction pipe (243) is connected to the suction port of the decompression-side pump (231b). The other end of the suction pipe (243) branches into two branch pipes, one of which is connected to the first switching valve (232) and the other one of which is connected to the second switching valve (233).

### <First Gas Pipe>

The first gas pipe (244) is a pipe through which nitrogen-enriched gas discharged from the decompression-side pump (231b) flows. The first gas pipe (244) serves as a first gas passage through which nitrogen-enriched gas flows. One end of the first gas pipe (244) is connected to a discharge port of the decompression-side pump (231b). The other end of the first gas pipe (244) is connected to the gas supply pipe (275).

The first gas pipe (244) is provided with a check valve (264). The check valve (264) allows gas to flow only from one end to the other end of the gas pipe (244) and blocks gas from flowing in the reverse direction.

### <Switching Valve>

The first switching valve (232) and the second switching valve (233) are switching valves each having three ports. The first switching valve (232) and the second switching valve (233) are each configured to switch between a first state (indicated by the solid line in FIG. 3) where a first port communicates with a second port so as to be blocked from a third port, and a second state (indicated by the broken line in FIG. 3) where the first port communicates with the third port so as to be blocked from the second port.

The first switching valve (232) has the first port connected to one end of the first adsorption vessel (234). The first switching valve (232) has the second port connected to one of the branch pipes of the introduction pipe (242), and the third port connected to one of the branch pipes of the suction pipe (243). The first switching valve (232) switches between a state where the first adsorption vessel (234) is connected to the compression-side pump (231a) and a state where the first adsorption vessel (234) is connected to the decompression-side pump (231b).

The second switching valve (233) has the first port connected to one end of the second adsorption vessel (235). The second switching valve (233) has the second port connected to one of the branch pipes of the introduction pipe (242), and the third port connected to one of the branch pipes of the suction pipe (243). The second switching valve (233) switches between a state where the second adsorption vessel (235) is connected to the compression-side pump (231a) and a state where the second adsorption vessel (235) is connected to the decompression-side pump (231b).

### <Adsorption Vessel>

The first adsorption vessel (234) and the second adsorption vessel (235) are members each including a cylindrical container and an adsorbent, where both ends of the cylindrical container are closed and the adsorbent fills the container. The adsorption vessel (234, 235) uses the adsorbent in order to separate gas to be treated (outside air in this embodiment) into an oxygen-enriched gas and a nitrogen-enriched gas.

The adsorbent that fills each adsorption vessel (234, 235) has characteristics of adsorbing nitrogen and water (water vapor) in gas to be treated in a pressurized state with a pressure higher than the atmospheric pressure, and desorbing nitrogen and water in a depressurized state with a pressure lower than the atmospheric pressure. One example of an adsorbent having such characteristics is porous zeolite with pores having a diameter smaller than the diameter of nitrogen molecules (3.0 angstrom) and larger than the diameter of oxygen molecules (2.8 angstrom).

### <Second Gas Pipe>

The second gas pipe (245) includes a trunk pipe (246), a first branch pipe (247a), a second branch pipe (247b), a supply-side branch pipe (248a), and a discharge-side branch pipe (248b). The second gas pipe (245) is provided with an oxygen switching valve (249). The second gas pipe (245) serves as a second gas passage through which oxygen-enriched gas flows.

The first branch pipe (247a) is a pipe for connecting the other end of the first adsorption vessel (234) to one end of the trunk pipe (246). The second branch pipe (247b) is a pipe for connecting the other end of the second adsorption vessel (235) to one end of the trunk pipe (246). The first branch pipe (247a) and the second branch pipe (247b) are each provided with a check valve (261). Each check valve (261) allows air to flow in a direction in which the air flows out from the associated adsorption vessel (234, 235) and blocks air from flowing in the reverse direction.

As described above, one end of the trunk pipe (246) is connected with the first branch pipe (247a) and the second branch pipe (247b). The other end of the trunk pipe (246) is connected to the oxygen switching valve (249). The trunk pipe (246) is provided with an orifice (263) and a check valve (262) in sequence from one end to the other end thereof. The check valve (262) allows air to flow from one end to the other end of the trunk pipe (246) and blocks air from flowing in the reverse direction.

The supply-side branch pipe (248a) has ends, one of which is connected to the oxygen switching valve (249) and the other one of which is connected to one end of the gas supply pipe (275). The supply-side branch pipe (248a) serves as a supply passage for introducing the oxygen-enriched gas to the inside of the container body (2). The discharge-side branch pipe (248b) has ends, one of which is connected to the oxygen switching valve (249) and the other one of which is connected to one end of the gas discharge pipe (276). The discharge-side branch pipe (248b) serves as a discharge passage for discharging the oxygen-enriched gas to the outside of the container body (2).

The oxygen switching valve (249) is a three-way valve. As described above, the oxygen switching valve (249) is connected with the trunk pipe (246), the supply-side branch pipe (248a), and the discharge-side branch pipe (248b). The oxygen switching valve (249) switches between a first state where the trunk pipe (246) communicates with the supply-side branch pipe (248a) so as to be blocked from the discharge-side branch pipe (248b) and a second state where the trunk pipe (246) communicates with the discharge-side branch pipe (248b) so as to be blocked from the supply-side branch pipe (248a).

The oxygen switching valve (249) is a switching mechanism for switching the second gas pipe (245) between an introduction mode and a discharge mode. If the oxygen switching valve (249) switches to the first state, the second gas pipe (245) switches to the introduction mode. Then the oxygen-enriched gas is introduced to the inside of the container body (2) through the supply-side branch pipe (248a). If the oxygen switching valve (249) switches to the second state, the second gas pipe (245) switches to the discharge mode. Then the oxygen-enriched gas is discharged to the outside of the container body (2) through the discharge-side branch pipe (248b).

### <Purge Pipe>

The first branch pipe (247a) and the second branch pipe (247b) of the second gas pipe (245) are each connected with a purge pipe (250). The purge pipe (250) has ends, one of which is connected to the first branch pipe (247a) and the other one of which is connected to the second branch pipe (247b). The one end of the purge pipe (250) is connected to the first branch pipe (247a) between the first adsorption vessel (234) and the check valve (261). The other end of the purge pipe (250) is connected to the second branch pipe (247b) between the second adsorption vessel (235) and the check valve (261).

The purge pipe (250) is provided with a purge valve (251). The purge valve (251) is an on-off valve comprised of an electromagnetic valve. The purge valve (251) is opened to equalize the pressures of the first adsorption vessel (234) and the second adsorption vessel (235). An orifice (252) is provided on each side of the purge valve (251) of the purge pipe (250).

### <Exhaust Connection Pipe>

The first gas pipe (244) is connected with an exhaust connection pipe (271). The exhaust connection pipe (271) has ends, one of which is connected to the first gas pipe (244) and the other one of which is connected to the second gas pipe (245). The one end of the exhaust connection pipe (271) is connected to the first gas pipe (244) between the decompression-side pump (231b) and the check valve (264). The other end of the exhaust connection pipe (271) is connected to one end of the gas discharge pipe (276).

The exhaust connection pipe (271) is provided with a gas discharge valve (272). The gas discharge valve (272) is an on-off valve comprised of an electromagnetic valve. When the gas discharge valve (272) is opened, the nitrogen-enriched gas flowing in the first gas pipe (244) is discharged to the outside of the container body (2). The gas discharge valve (272) is a flow rate regulation mechanism for regulating the flow rate of nitrogen-enriched gas flowing in the exhaust connection pipe (271). If the time period in which the gas discharge valve (272) is opened and the time period in which the gas discharge valve (272) is closed are adjusted, the flow rate of nitrogen-enriched gas discharged to the outside of the container body (2) through the exhaust connection pipe (271) is changed.

### <Gas Supply Pipe>

As described above, one end of the gas supply pipe (275) is connected with the first gas pipe (244) and the supply-side branch pipe (248a) of the second gas pipe (245). The gas supply pipe (275) extends to the outside of the unit case (201). The other end of the gas supply pipe (275) opens to a downstream side of the internal fan (35) in the inside air flow path (29) of the transportation refrigeration apparatus (10). The gas supply pipe (275) is a pipe for introducing gas flowing thereinto from one end thereof to the inside of the container body (2).

The gas supply pipe (275) is provided with a gas supply valve (273). The gas supply valve (273) is an on-off valve comprised of an electromagnetic valve.

### <Gas Discharge Pipe>

As described above, one end of the gas discharge pipe (276) is connected with the discharge-side branch pipe (248b) of the second gas pipe (245) and the exhaust connection pipe (271). The gas discharge pipe (276) extends to the outside of the unit case (201). The other end of the gas discharge pipe (276) opens to the external equipment room (28) of the transportation container (1). The gas discharge pipe (276) is a pipe for discharging gas flowing therein from one end thereof to the outside of the container body (2).

### <Measurement Pipe>

The first gas pipe (244) is connected with a measurement pipe (281). The measurement pipe (281) is a pipe for connecting the gas pipe (244) to the sensor unit (160). One end of the measurement pipe (281) is connected to the first gas pipe (244) at a downstream side of the check valve (264). The other end of the measurement pipe (281) is connected to the sensor unit (160).

The measurement pipe (281) is provided with a measurement on-off valve (282). The measurement on-off valve (282) is an on-off valve comprised of an electromagnetic valve. The measurement on-off valve (282) is opened when sending air flowing in the first gas pipe (244) to the sensor unit (160).

### <Bypass Pipe>

The introduction pipe (242) is connected with a bypass connection pipe (255). The bypass connection pipe (255) is a pipe for enabling outside air to bypass the first adsorption vessel (234) and the second adsorption vessel (235) and to be supplied to the storage space (5) of the transportation container (1). One end of the bypass connection pipe (255) is connected between the branch point of the introduction pipe (242) and the compression-side pump (231a). The other end of the bypass connection pipe (255) is connected to the first gas pipe (244) at a downstream side of the check valve (264).

The bypass connection pipe (255) is provided with a bypass on-off valve (256). The bypass on-off valve (256) is an on-off valve comprised of an electromagnetic valve. The bypass on-off valve (256) is opened supply the outside air discharged by the compression-side pump (231a) to the storage space (5) without changing the composition of the outside air.

### <Sensor Unit>

The sensor unit (160) includes an oxygen sensor (161), a carbon dioxide sensor (162), and a sensor case (163).

The oxygen sensor (161) is, e.g., a sensor of a zirconia current type that measures a concentration of oxygen in mixed gas such as air. The carbon dioxide sensor (162) is, e.g., a non-dispersive infrared (NDIR) sensor that measures a concentration of carbon dioxide in mixed gas such as air. The oxygen sensor (161) and the carbon dioxide sensor (162) are housed in the sensor case (163).

The sensor case (163) is a box-shaped member. The sensor case (163) includes an air filter (164). The air filter (164) is a membrane filter for capturing dust and the like contained in the inside air. The air filter (164) filters the inside air flowing into the sensor case (163).

The sensor case (163) is connected with the measurement pipe (281). The sensor case (163) is connected with an outlet pipe (165). The outlet pipe (165) has an inlet end connected to the sensor case (163), and an outlet end opening to an upstream of the internal fan (35) in the inside air flow path (29).

When the measurement on-off valve (282) is closed, the inside air flows inside the sensor case (163). Specifically, the inside air flowing in the inside air flow path (29) flows into the sensor case (163) through the air filter (164). After having passed through the sensor case (163), the inside air flows through the outlet pipe (165), and then flows into the suction side of the internal fans (35) in the inside air flow path (29). Thus, when the measurement on-off valve (282) is closed, the oxygen sensor (161) measures a concentration of oxygen in the inside air, and the carbon dioxide sensor (162) measures a concentration of carbon dioxide in the inside air.

On the other hand, when the measurement on-off valve (282) is opened, the gas flowing in the measurement pipe (281) flows inside the sensor case (163). Specifically, the gas flowing in the first gas pipe (244) or the bypass connection pipe (255) flows into the sensor case (163) through the measurement pipe (281). After having passed through the sensor case (163), the gas flows through the outlet pipe (165), and then flows into the suction-side of the internal fans (35) in the inside air flow path (29). Thus, when the measurement on-off valve (282) is opened, the oxygen sensor (161) measures a concentration of oxygen in the gas flowing from the measurement pipe (281) into the sensor case (163), and the carbon dioxide sensor (162) measures a concentration of carbon dioxide in the gas flowing from the measurement pipe (281) into the sensor case (163).

### <Ventilation Exhaust Pipe>

The ventilation exhaust pipe (150) is a pipe for discharging inside air in the transportation container (1) to the external space. The ventilation exhaust pipe (150) penetrates the external wall (21) and the internal wall (22) of the transportation refrigeration apparatus (10). The ventilation exhaust pipe (150) is provided with a ventilation exhaust valve (151). The ventilation exhaust valve (151) is an on-off valve comprised of an electromagnetic valve.

### <Controller>

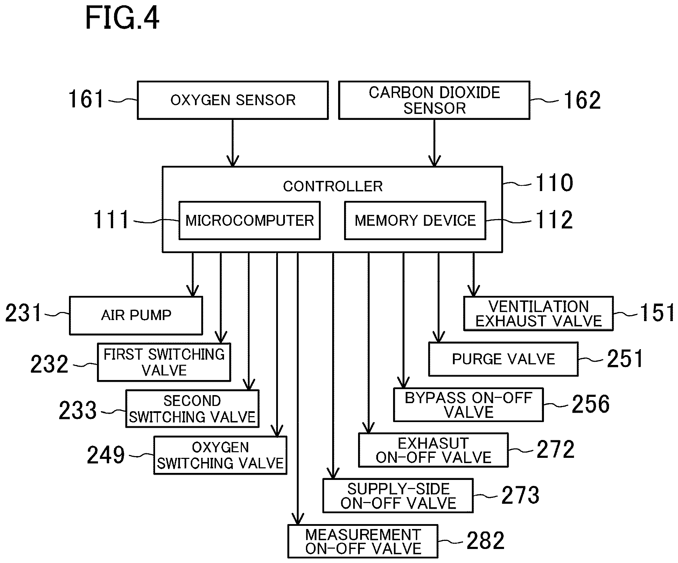

As illustrated in FIG. 4, the controller (110) includes a microcomputer (111) mounted on a control board, and a memory device (112) storing software for operating the microcomputer (111). The memory device (112) is a semiconductor memory.

The controller (110) controls the components of the inside air control apparatus (100). The controller (110) receives values measured by the oxygen sensor (161) and the carbon dioxide sensor (162). The controller (110) controls the air pump (231), a first switching valve (136), and a second switching valve (137). The controller (110) controls the oxygen switching valve (249), the ventilation exhaust valve (151), the purge valve (251), the bypass on-off valve (256), the gas discharge valve (272), the gas supply valve (273), and the measurement on-off valve (282).

### -Operation of Inside Air Control Apparatus-

The inside air control apparatus (100) adjusts the composition of the inside air (in this embodiment, a concentration of oxygen and a concentration of carbon dioxide in the inside air) in the storage space (5) of the transportation container (1).

The inside air control apparatus (100) performs a decrease operation, an increase operation, and an outside air introduction operation. The decrease operation is an operation for decreasing a concentration of oxygen in the inside air. The increase operation is an operation for increasing a concentration of oxygen in the inside air. The outside air introduction operation is an operation for decreasing a concentration of carbon dioxide in the inside air.

In each of the decrease operation and the increase operation, the inside air control apparatus (100) repeats a first operation and a second operation alternately to separate the outside air into nitrogen-enriched gas (the first gas) and oxygen-enriched gas (the second gas). The inside air control apparatus (100) repeats the first operation and the second operation alternately each for predetermined switching period (e.g., 14 seconds). The controller (110) controls the first switching valve (232) and the second switching valve (233) so that the first operation and the second operation are performed alternately.

### <First Operation>

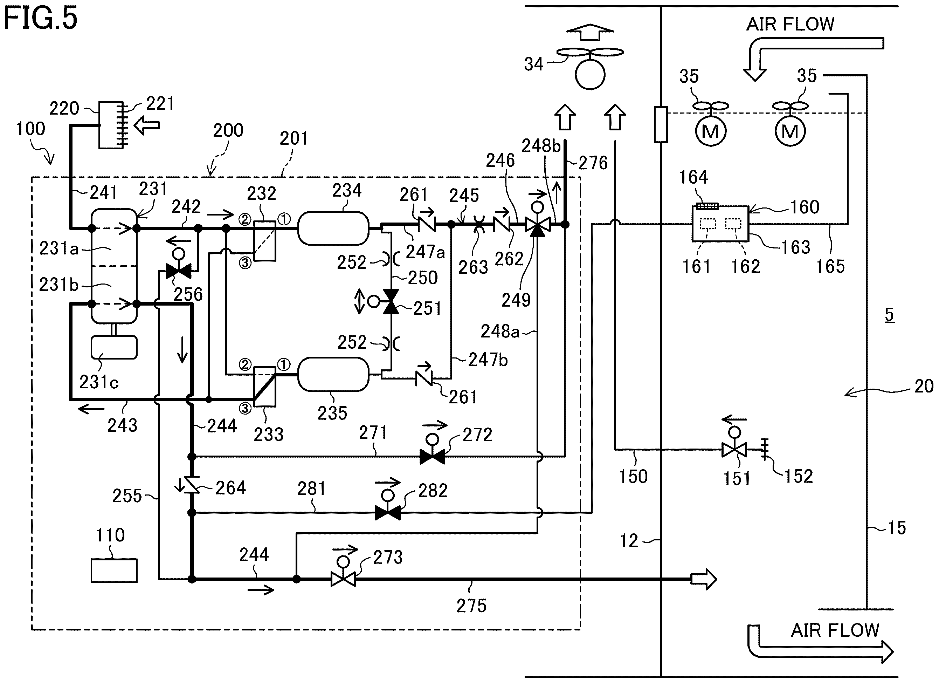

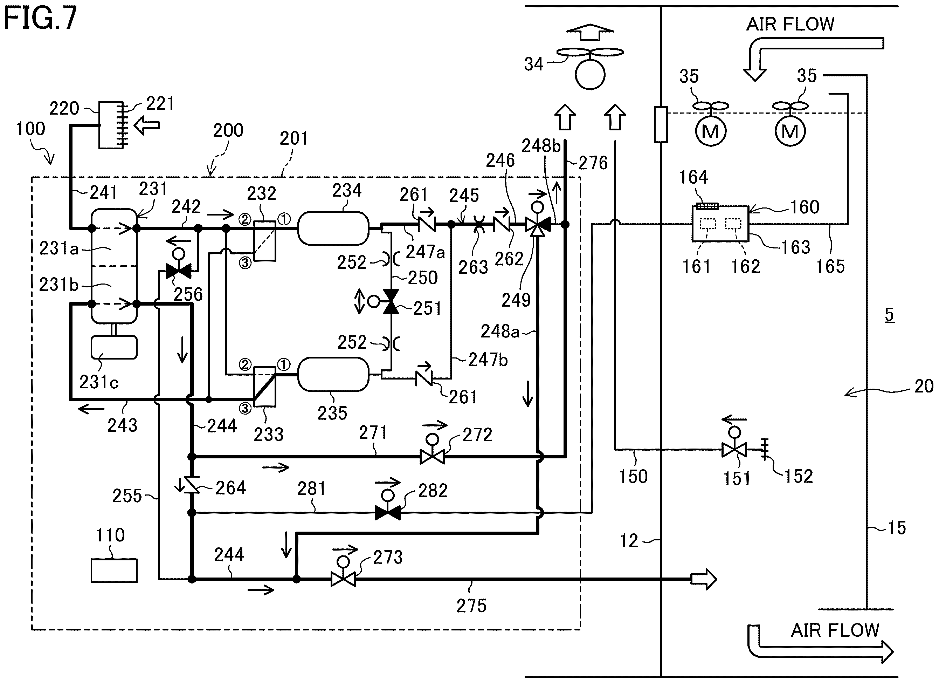

As illustrated in FIGS. 5 and 7, in the first operation, the first switching valve (232) is set to the first state, and the second switching valve (233) is set to the second state. In the first operation, the purge valve (251), the bypass on-off valve (256), and the measurement on-off valve (282) are held closed. In the first operation, the air pump (231) operates to perform an adsorption operation for the first adsorption vessel (234) and a desorption operation for the second adsorption vessel (235).

The compression-side pump (231a) sucks and compresses the outside air (atmospheric air) from the outside air pipe (241), and supplies the compressed outside air to the first adsorption vessel (234). In the first adsorption vessel (234), nitrogen and water (water vapor) in the supplied outside air are adsorbed by the adsorbent. As a result, in the first adsorption vessel (234), oxygen-enriched gas having a lower concentration of nitrogen and a higher concentration of oxygen than the outside air is produced. The oxygen-enriched gas flows out from the first adsorption vessel (234) to the first branch pipe (247a) of the second gas pipe (245).

Meanwhile, the decompression-side pump (231b) sucks gas from the second adsorption vessel (235). In the second adsorption vessel (235), the pressure therein decreases, and nitrogen and water are desorbed from the adsorbent. As a result, in the second adsorption vessel (235), nitrogen-enriched gas having a higher concentration of nitrogen and a lower concentration of oxygen than the outside air is produced. The nitrogen-enriched gas flows from the second adsorption vessel (235) into the suction pipe (243), and is sucked into the decompression-side pump (231b). The decompression-side pump (231b) compresses and discharges the sucked nitrogen-enriched gas to the first gas pipe (244).

### <Second Operation>

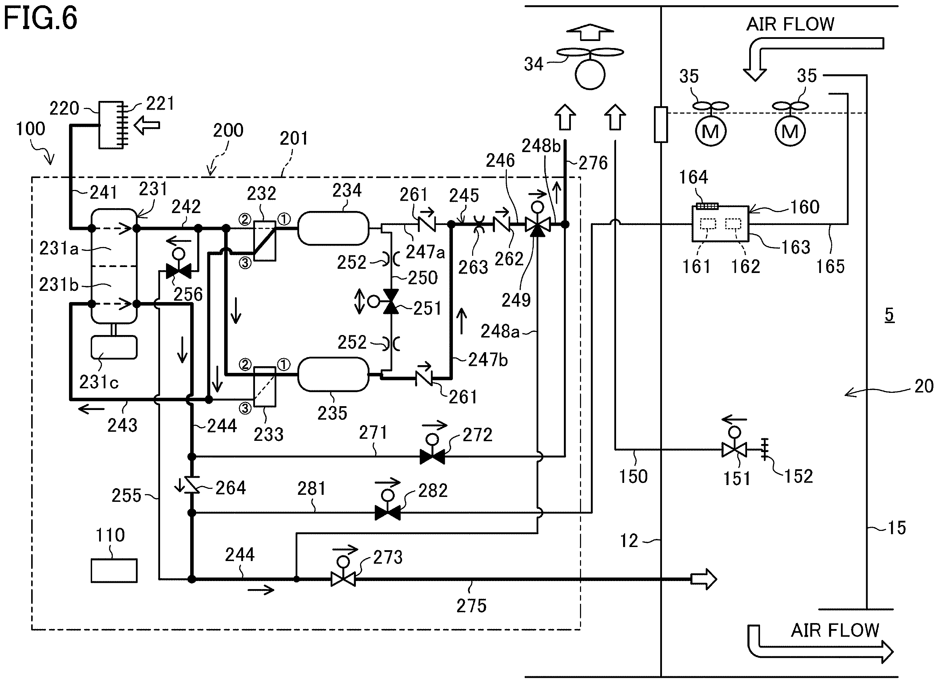

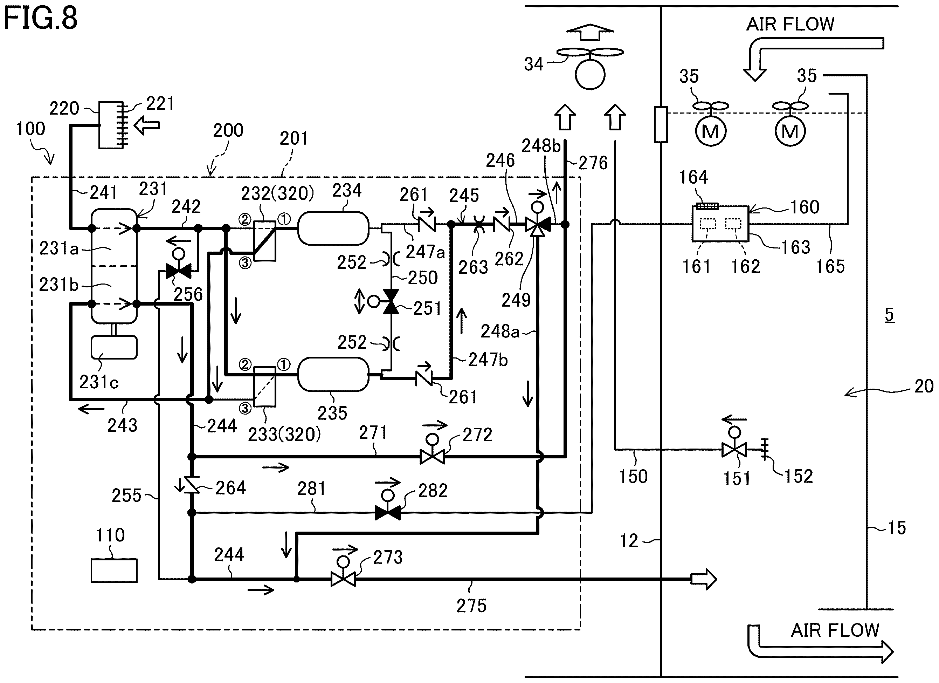

As illustrated in FIGS. 6 and 8, in the second operation, the first switching valve (232) is set to the second state, and the second switching valve (233) is set to the first state. In the second operation, the purge valve (251), the bypass on-off valve (256), and the measurement on-off valve (282) are held closed. In the second operation, the air pump (231) operates to perform a desorption operation for the first adsorption vessel (234) and an adsorption operation for the second adsorption vessel (235).

The compression-side pump (231a) sucks and compresses the outside air (atmospheric air) from the outside air pipe (241), and supplies the compressed outside air to the second adsorption vessel (235). In the second adsorption vessel (235), nitrogen and water (water vapor) in the supplied outside air are adsorbed the adsorbent. As a result, in the second adsorption vessel (235), oxygen-enriched gas having a lower concentration of nitrogen and a higher concentration of oxygen than the outside air is produced. The oxygen-enriched gas flows out from the second adsorption vessel (235) to the second branch pipe (247b) of the second gas pipe (245).

Meanwhile, the decompression-side pump (231b) sucks gas from the first adsorption vessel (234). In the first adsorption vessel (234), the pressure therein decreases, and nitrogen and water are desorbed from the adsorbent. As a result, in the first adsorption vessel (234), nitrogen-enriched gas having a higher concentration of nitrogen and a lower concentration of oxygen than the outside air is produced. The nitrogen-enriched gas flows from the first adsorption vessel (234) into the suction pipe (243), and is sucked into the decompression-side pump (231b). The decompression-side pump (231b) compresses and discharges the sucked nitrogen-enriched gas to the first gas pipe (244).

### -Decrease Operation-

The decrease operation of the inside air control apparatus (100) will be described. In the decrease operation, the inside air control apparatus (100) supplies the nitrogen-enriched gas as the first gas to the storage space (5), thereby decreasing a concentration of oxygen in the inside air.

As illustrated in FIGS. 5 and 6, in the decrease operation, the gas supply valve (273) is held opened, and the gas discharge valve (272) is held closed. In the decrease operation, the oxygen switching valve (249) is set to the second state. As a result, the trunk pipe (246) communicates with the discharge-side branch pipe (248b), and the second gas pipe (245) switches to the discharge mode.

In the decrease operation, the nitrogen-enriched gas having discharged from the decompression-side pump (231b) to the first gas pipe (244) flows to the inside of the container body (2) through the gas supply pipe (275). On the other hand, the oxygen-enriched gas having flowed from the first adsorption vessel (234) or the second adsorption vessel (235) into the second gas pipe (245) passes through the trunk pipe (246) and the discharge-side branch pipe (248b) in sequence, and then flows to the outside of the container body (2) through the gas discharge pipe (276).

In the decrease operation, the ventilation exhaust valve (151) is held opened, and the inside air flows to the outside of the container body (2) through the ventilation exhaust pipe (150). Accordingly, the inside air is gradually replaced with the nitrogen-enriched gas, and a concentration of oxygen in the inside air gradually decreases. In the decrease operation, the flow rate of the nitrogen-enriched gas supplied to the storage space (5) and the flow rate of the inside air discharged from the storage space (5) are set to appropriate rates so that the storage space (5) is held at a positive pressure.

### -Increase Operation-

The increase operation of the inside air control apparatus (100) will be described. In the increase operation, the inside air control apparatus (100) supplies the oxygen-enriched gas as the second gas to the storage space (5), thereby increasing a concentration of oxygen in the inside air.

As illustrated in FIGS. 7 and 8, in the increase operation, the gas supply valve (273) is held opened, and the gas discharge valve (272) is held opened or is opened or closed. In the decrease operation, the oxygen switching valve (249) is set to the first state. As a result, the trunk pipe (246) communicates with the supply-side branch pipe (248a), and the second gas pipe (245) switches to the introduction mode.

In the increase operation, part of the nitrogen-enriched gas having discharged from the decompression-side pump (231b) to the first gas pipe (244) flows to the outside of the container body (2) through the exhaust connection pipe (271) and the gas discharge pipe (276) in sequence, and the rest thereof flows to the inside of the container body (2) through the gas supply pipe (275). On the other hand, the oxygen-enriched gas having flowed from the first adsorption vessel (234) or the second adsorption vessel (235) into the second gas pipe (245) passes through the trunk pipe (246) and the supply-side branch pipe (248a) in sequence, and then flows into the gas supply pipe (275) and then to the inside of the container body (2). In this manner, in the decrease operation, part of the nitrogen-enriched gas and all of the oxygen-enriched gas are supplied to the storage space (5).

In the increase operation, the ventilation exhaust valve (151) is held opened, and the inside air flows to the outside of the container body (2) through the ventilation exhaust pipe (150). Accordingly, the inside air is gradually replaced with the oxygen-enriched gas, and a concentration of oxygen in the inside air gradually increases. In the increase operation, the flow rates of the oxygen-enriched gas and the nitrogen-enriched gas supplied to the storage space (5) and the flow rate of the inside air discharged from the storage space (5) are set to appropriate rates so that the storage space (5) is held at a positive pressure.

### <Regulation of Flow Rate of Gas>

In the increase operation, the inside air control apparatus (100) opens or closes the gas discharge valve (272) serving as a flow rate regulation mechanism to regulate the flow rate of the nitrogen-enriched gas flowing to the outside of the container body (2). When the flow rate of the nitrogen-enriched gas flowing to the outside of the container body (2) is changed, the flow rate of the nitrogen-enriched gas supplied to the inside of the container body (2) together with the oxygen-enriched gas is also changed. The inside air control apparatus (100) controls the gas discharge valve (272), thereby regulating the flow rate of gas supplied to the inside of the container body (2) in the increase operation.

As described above, the inside air control apparatus (100) in the increase operation performs the first operation and the second operation alternately each for predetermined switching period T (T = 14 seconds in this embodiment). The inside air control apparatus (100) opens or closes the gas discharge valve (272) at the same cycle as the switching cycle between the first operation and the second operation.

Specifically, the inside air control apparatus (100) holds the gas discharge valve (272) closed for a closing period Tc that is part of the switching period T, and holds the gas discharge valve (272) opened for an opening period To that is the rest of the switching period T. Note that Closing Period Tc + Opening Period To = Switching Period T.

The inside air control apparatus (100) adjusts the closing period Tc and the opening period To, thereby regulating the flow rate of gas supplied to the inside of the container body (2) in the increase operation. As the closing period Tc becomes longer (i.e., the opening period To becomes shorter), the flow rate of the nitrogen-enriched gas flowing to the outside of the container body (2) decreases and the flow rate of the gas supplied to the inside of the container body (2) increases. On the other hand, as the closing period Tc becomes shorter (i.e., the opening period To becomes longer), the flow rate of the nitrogen-enriched gas flowing to the outside of the container body (2) increases and the flow rate of the gas supplied to the inside of the container body (2) decreases.

### -Outside Air Introduction Operation-

The outside air introduction operation of the inside air control apparatus (100) will be described. In the outside air introduction operation, the inside air control apparatus (100) supplies the outside air (atmospheric air) directly to the storage space (5). The outside air introduction operation is performed mainly to decrease a concentration of carbon dioxide in the inside air.

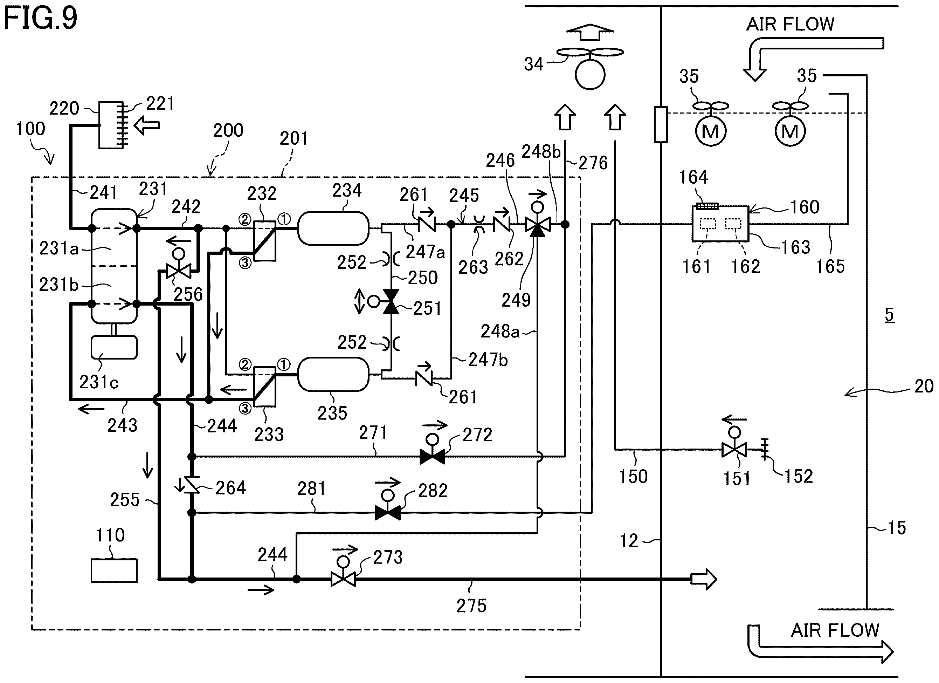

As illustrated in FIG. 9, in the outside air introduction operation, both the first switching valve (232) and the second switching valve (233) are set to the second state. In the outside air introduction operation, the gas supply valve (273) and the bypass on-off valve (256) are held opened, and the other on-off valves (251, 272, 282) are held closed. In the outside air introduction operation, the air pump (231) operates. The oxygen switching valve (249) may be set to any of the first state and the second state.

The compression-side pump (231a) sucks and compresses the outside air (atmospheric air) from the outside air pipe (241), and discharges the compressed outside air to the introduction pipe (242). The outside air discharged from the compression-side pump (231a) flows through the introduction pipe (242), the bypass connection pipe (255), and the first gas pipe (244) in sequence, and is supplied to the inside air flow path (29). In this manner, in the outside air introduction operation, the air having the same composition as that of the atmospheric air is supplied to the storage space (5) of the transportation container (1).

The decompression-side pump (231b) sucks gas from both the first adsorption vessel (234) and the second adsorption vessel (235) and discharges the sucked gas to the first gas pipe (244). The gas discharged to the first gas pipe (244) by the decompression-side pump (231b) is supplied to the inside air flow path (29) together with the outside air having flowed from the bypass connection pipe (255) into the first gas pipe (244).

When the decompression-side pump (231b) sucks gas from the first adsorption vessel (234) and the second adsorption vessel (235), the pressures of the first adsorption vessel (234) and the second adsorption vessel (235) gradually decrease. Then, when the duration of the outside air introduction operation exceeds a certain time (e.g., 45 seconds), the flow rate of gas sucked by the decompression-side pump (231b) reaches substantially zero.

In the outside air introduction operation, the ventilation exhaust valve (151) is held opened, and the inside air flows to the outside of the container body through the ventilation exhaust pipe (150). Accordingly, the inside air is gradually replaced with the atmospheric air, and a concentration of carbon dioxide in the inside air gradually decreases. In the outside air introduction operation, the flow rate of the outside air supplied to the storage space (5) and the flow rate of the inside air discharged from the storage space (5) are set to appropriate rate so that the storage space (5) is held at a positive pressure.

### -Switching of Operation of Inside Air Control Apparatus-

As described above, the inside air control apparatus (100) performs the decrease operation, the increase operation, and the outside air introduction operation. While stopping the decrease operation, the increase operation, and the outside air introduction operation, the inside air control apparatus (100) performs a standby operation for monitoring a concentration of oxygen and a concentration of carbon dioxide in the inside air.

The fresh products stored in the storage space (5) breathe, absorbing oxygen and releasing carbon dioxide. Accordingly, in the standby operation, the amount of oxygen in the inside air gradually decreases. Thus, the inside air control apparatus (100) performs the increase operation to compensate for the oxygen decreased by breathing of the fresh products.

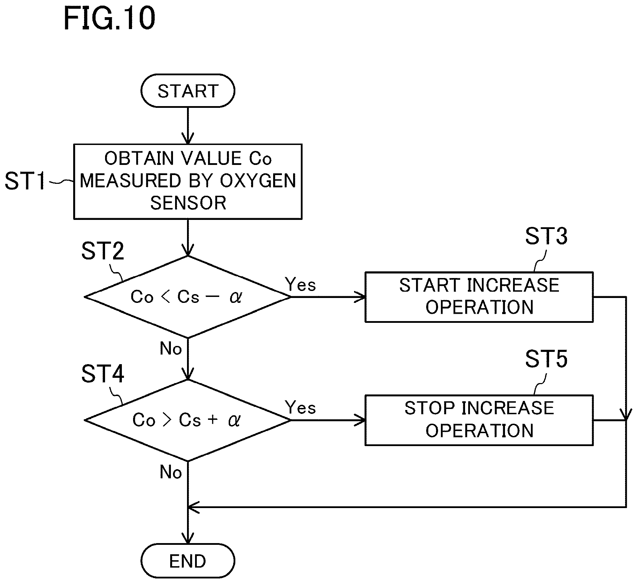

Here, the operation of the controller (110) of the inside air control apparatus (100) controlling the start and stop of the increase operation will be described with reference to the flowchart in FIG. 10. The controller repeats the operation shown in the flowchart in FIG. 10 at predetermined time intervals (e.g., every ten minutes).

The control operation shown in FIG. 10 is an operation for holding, within a target range, a value Co measured by the oxygen sensor (161) (an actual measured value of a concentration of oxygen in the inside air). The target range is a numerical range including a set value Cs of a concentration of oxygen in the inside air. The target range of this embodiment ranges in Cs ± α (i.e., Cs - α or more and Cs + α or less). The value of α is 0.5%, for example.

In the process of step ST1, the controller (110) obtains the value Co measured by the oxygen sensor (161).

In the process of the next step ST2, the controller (110) determines whether the condition that "the value Co measured by the oxygen sensor (161) is lower than the lower limit (Cs - α) of the target range" is satisfied. The controller (110) performs the process of step ST3 if the condition is satisfied, and performs the process of step ST4 if the condition is not satisfied.

In the process of step ST3, the controller (110) orders the inside air control apparatus (100) to start the increase operation. In order to start the increase operation, the controller (110) switches the oxygen switching valve (249) from the second state to the first state.

In the process of step ST4, the controller (110) determines whether the condition that "the value Co measured by the oxygen sensor (161) is higher than the upper limit (Cs + α) of the target range" is satisfied. The controller (110) performs the process of step ST5 if the condition is satisfied.

In the process of step ST5, the controller (110) orders the inside air control apparatus (100) to stop the increase operation. In order to stop the increase operation, the controller (110) switches the oxygen switching valve (249) from the first state to the second state.

The condition in step ST4 being not satisfied means that the value Co measured by the oxygen sensor (161) falls within the target range (i.e., the relationship Cs - α ≤ Co ≤ Cs + α is satisfied). Thus, in this case, the controller (110) ends the control operation of the flowchart in FIG. 10 and maintains the operating state of the inside air control apparatus (100).

### -Feature (1) of Embodiment-

The inside air control apparatus (100) of this embodiment performs the decrease operation for decreasing a concentration of oxygen in the inside air and the increase operation for increasing a concentration of oxygen in the inside air. In the increase operation, the oxygen-enriched gas having a lower concentration of nitrogen and a higher concentration of oxygen than the outside air is introduced to the inside of the container body (2) through the second gas passage (245). Accordingly, the rate of increase in a concentration of oxygen in the inside air is higher than when the outside air is introduced to the inside of the container body (2) in order to increase a concentration of oxygen in the inside air. As a result, the time required to increase a concentration of oxygen in the inside air is shortened.

### -Feature (2) of Embodiment-

The inside air control apparatus (100) of this embodiment operates the oxygen switching valve (249) serving as a switching mechanism, thereby switching the second gas pipe (245) serving as the second gas passage between the introduction mode and the discharge mode. When the second gas pipe (245) is in the introduction mode, the oxygen switching valve (249) allows the trunk pipe (246) to communicate with the supply-side branch pipe (248a) so that the oxygen-enriched gas is introduced to the inside of the container body (2) through the supply-side branch pipe (248a). When the second gas pipe (245) is in the discharge mode, the oxygen switching valve (249) allows the trunk pipe (246) to communicate with the discharge-side branch pipe (248b) so that the oxygen-enriched gas is discharged to the outside of the container body (2) through the discharge-side branch pipe (248b).

### -Feature (3) of Embodiment-

In the inside air control apparatus (100) of this embodiment, the controller (110) controls the oxygen switching valve (249) based on the value measured by the oxygen sensor (161), thereby starting or stopping the increase operation. When the inside air control apparatus (100) starts the increase operation, the second gas pipe (245) switches from the discharge mode to the introduction mode. When the inside air control apparatus (100) stops the increase operation, the second gas pipe (245) switches from the introduction mode to the discharge mode.

### -Feature (4) of Embodiment-

In the increase operation, the inside air control apparatus (100) of this embodiment supplies all of the oxygen-enriched gas flowing out from the adsorption vessel (234, 235) and part of the nitrogen-enriched gas flowing out from the adsorption vessel (234, 235) to the inside of the container body (2).

As described above, the adsorbent contained in the adsorption vessel (234, 235) adsorbs nitrogen and water (water vapor). In the adsorption vessel (234, 235) subjected to the adsorption operation, nitrogen and water vapor contained in the outside air as gas to be treated are adsorbed by the adsorbent. Accordingly, the oxygen-enriched gas flowing out from the adsorption vessel (234, 235) subjected to the adsorption operation has a low humidity (i.e., contains a small amount of water vapor). If, in the increase operation, only the oxygen-enriched gas having a low humidity is supplied to the inside of the container body (2), the humidity in the storage space (5) may drop, and then the freshness of the fresh products may lower.

On the other hand, the nitrogen-enriched gas flowing out from the adsorption vessel (234, 235) subjected to the desorption operation contains water vapor desorbed from the adsorbent, and thus has a high humidity. Thus, in order to reduce a decrease in the humidity of the inside air in the increase operation, the inside air control apparatus (100) of this embodiment supplies the nitrogen-enriched gas having a high humidity together with the oxygen-enriched gas having a low humidity to the inside of the container body (2).

In this manner, while reducing a decrease in the humidity of the inside air in the increase operation, the inside air control apparatus (100) of this embodiment can shorten the time required for the composition of the inside air to reach a target composition.

### -Feature (5) of Embodiment-

The inside air control apparatus (100) of this embodiment opens or closes the gas discharge valve (272) in the increase operation, thereby regulating the flow rate of gas supplied to the storage space (5) in the increase operation. Accordingly, the inside air control apparatus (100) of this embodiment can regulate the flow rate of the first gas introduced to the inside of the storage (2) to reduce a decrease in the humidity of the inside air in the increase operation. Thus, according to this embodiment, it is possible to shorten the time required for the composition of the inside air to reach a target composition, while reducing a decrease in the humidity of the inside air.

As described above, in the increase operation, the mixed gas comprised of the oxygen-enriched gas and the nitrogen-enriched gas flows to the inside of the container body (2), and at the same time, the inside air in the storage space (5) flows to the outside of the container body (2) through the ventilation exhaust pipe (150). At this time, the air pressure in the storage space (5) is held substantially constant, and thus as the flow rate of the gas flowing to the inside of the container body (2) increases, the flow rate of the inside air flowing to the outside of the container body (2) increases.

A concentration of carbon dioxide in the gas supplied to the inside of the container body (2) in the increase operation is as significantly low as a concentration of carbon dioxide in the outside air. Thus, as the flow rate of gas supplied to the inside of the container body (2) becomes higher, the amount of carbon dioxide flowing to the outside of the container body (2) becomes larger, which may cause a decrease in a concentration of carbon dioxide in the inside air.

To deal with this problem, the inside air control apparatus (100) of this embodiment can regulate the flow rate of gas supplied to the storage space (5) in the increase operation. Thus, accordingly to this embodiment, by regulating the flow rate of the gas supplied to the storage space (5) in the increase operation, it is possible to reduce a decrease in a concentration of carbon dioxide in the inside air in the increase operation.

### -Variations of Embodiment-

The inside air control apparatus (100) of the above embodiment may be modified as follows. The following variations may be combined or replaced as necessary as long as the functions of the inside air control apparatus (100) are not impaired.

### <First Variation>

In the inside air control apparatus (100) of the above embodiment, the oxygen switching valve (249), which is a single three-way valve, serves as a switching mechanism, but the switching mechanism is not limited to a single three-way valve.

For example, electromagnetic valves, each provided in the respective one of the supply-side branch pipe (248a) and the discharge-side branch pipe (248b), may serve as a switching mechanism. In this case, when the electromagnetic valve of the supply-side branch pipe (248a) is opened and the electromagnetic valve of the discharge-side branch pipe (248b) is closed, the second gas pipe (245) switches to the introduction mode. Further, in this case, when the electromagnetic valve of the supply-side branch pipe (248a) is closed and the electromagnetic valve of the discharge-side branch pipe (248b) is opened, the second gas pipe (245) switches to the discharge mode.

### <Second Variation>

In the inside air control apparatus (100) of the above embodiment, an electromagnetic valve is used as the gas discharge valve (272) serving as the flow rate regulation mechanism, but the gas discharge valve (272) is not limited to an electromagnetic valve. For example, the gas discharge valve (272) may be an electric valve of which the opening degree is variable. In this case, the controller (110) of the inside air control apparatus (100) adjusts the opening degree of the gas discharge valve (272) comprised of an electric valve, thereby regulating the flow rate of gas supplied to the inside of the container body (2) in the increase operation.

### <Third Variation>

The inside air control apparatus (100) of the above embodiment may be installed in a stationary refrigerator or freezer. The inside air control apparatus (100) of this embodiment may be installed in a refrigerating/freezing container for overland transportation by truck, rail, and the like. The inside air control apparatus (100) of the above embodiment may be installed in a refrigerating/freezing truck including a vehicle body integrated with a box defining a cargo space.

While the embodiment and variations thereof have been described above, it will be understood that various changes in form and details may be made without departing from the spirit and scope of the claims. The foregoing embodiment and variations thereof may be combined or replaced with each other without deteriorating the intended functions of the present disclosure. The ordinal numbers such as "first," "second," ... in the description and claims are used to distinguish the terms to which these expressions are given, and do not limit the number and order of the terms.

### INDUSTRIAL APPLICABILITY

As described above, the present invention is useful for an inside air control apparatus, a refrigeration apparatus, and a transportation container.

### DESCRIPTION OF REFERENCE CHARACTERS

- 1: Transportation Container
- 2: Container Body (Storage)
- 10: Transportation Refrigeration Apparatus (Refrigeration Apparatus)
- 11: Refrigerant Circuit
- 100: Inside Air Control Apparatus
- 110: Controller
- 161: Oxygen Sensor
- 234: First Adsorption Vessel (First Adsorber, Adsorber)
- 235: Second Adsorption Vessel (Second Adsorber, Adsorber)
- 244: First Gas Pipe (First Gas Passage)
- 245: Second Gas Pipe (Second Gas Passage)
- 246: Trunk Passage (Trunk Passage)
- 248a: Supply-Side Branch Pipe (Supply Passage)
- 248b: Discharge-Side Branch Pipe (Discharge Passage)
- 249: Oxygen Switching Valve (Switching Mechanism)
- 271: Exhaust Connection Pipe (First Gas Discharge Passage)
- 272: Gas Discharge Valve (Flow Rate Regulation Mechanism)

## Claims

1. An inside air control apparatus (100) for adjusting a composition of inside air in a storage (2), comprising:
an adsorber (234, 235) containing an adsorbent for adsorbing nitrogen and configured to separate outside air outside the storage into a first gas having a higher concentration of nitrogen and a lower concentration of oxygen than the outside air and a second gas having a lower concentration of nitrogen and a higher concentration of oxygen than the outside air;
a first gas passage (244) through which the first gas flows; and
a second gas passage (245) through which the second gas flows,
the inside air control apparatus (100) being configured to perform
a decrease operation for decreasing a concentration of oxygen in the inside air by introducing the first gas to an inside of the storage (2) through the first gas passage (244); and
an increase operation for increasing a concentration of oxygen in the inside air by introducing the second gas to the inside of the storage (2) through the second gas passage (245).

2. The inside air control apparatus (100) of claim 1, wherein
the second gas passage (245) is able to switch between an introduction mode for introducing the second gas to the inside of the storage (2) and a discharge mode for discharging the second gas to an outside of the storage (2).

3. The inside air control apparatus (100) of claim 2, wherein
the second gas passage (245) includes
a trunk passage (246) connected to the adsorber (234, 235),
a supply passage (248a) communicating with the inside of the storage (2),
a discharge passage (248b) communicating with the outside of the storage (2), and
a switching mechanism (249) allowing the trunk passage (246) to communicate with the supply passage (248a) in the introduction mode and allowing the trunk passage (246) to communicate with the discharge passage (248b) in the discharge mode.

4. The inside air control apparatus (100) of claim 2 or 3, further comprising:
an oxygen sensor (161) configured to measure a concentration of oxygen in the inside air; and
a controller (110) configured to switch the second gas passage (245) between the introduction mode and the discharge mode based on a value measured by the oxygen sensor (161).

5. The inside air control apparatus (100) of any one of claims 1 to 4, wherein
in the increase operation, the second gas is introduced to the inside of the storage (2) through the second gas passage (245), and the first gas is introduced to the inside of the storage (2) through the first gas passage (244).

6. The inside air control apparatus (100) of claim 5, further comprising:
a flow rate regulation mechanism (272) configured to regulate a flow rate of the first gas introduced to the inside of the storage (2) in the increase operation.

7. The inside air control apparatus (100) of claim 6, further comprising:
a first gas discharge passage (271) having ends, one of which is connected to the first gas passage (244) and the other one of which communicates with the outside of the storage (2), wherein
the flow rate regulation mechanism (272) is a valve provided in the first gas discharge passage (271).

8. The inside air control apparatus (100) of any one of claims 1 to 7, wherein
the adsorber includes a first adsorber (234) and a second adsorber (235) each containing the adsorbent, and
the inside air control apparatus (100) alternately repeats
a first operation for making the second gas flow out from the first adsorber (234) by supplying the outside air to the first adsorber (234) and for making the first gas flow out from the second adsorber (235), and
a second operation for making the second gas flow out from the second adsorber (235) by supplying the outside air to the second adsorber (235) and for making the first gas flow out from the first adsorber (234).

9. A refrigeration apparatus, comprising:
the inside air control apparatus (100) of any one of claims 1 to 8; and
a refrigerant circuit (11) configured to perform a refrigeration cycle to adjust a temperature of the inside air.

10. A transportation container, comprising:
the refrigeration apparatus (10) of claim 9; and
a container body provided with the refrigeration apparatus (10) and constituting the storage (2).
